# EUROPEAN PATENT APPLICATION

(11) **EP 4 451 217 A1**
(43) Date of publication of application: **23.10.2024**
(21) Application number: 21968027.9
(22) Date of filing: 13.12.2021
(51) Int. Cl.: G06T 9/00

(54) **ENCODING DEVICE, ENCODING METHOD, AND PROGRAM**

(71) Applicant: Nippon Telegraph And Telephone Corporation, Chiyoda-ku Tokyo 100-8116 (JP)
(72) Inventor: SUGIMOTO Shiori, Musashino-shi, Tokyo 180-8585 (JP); BANDO Yukihiro, Musashino-shi, Tokyo 180-8585 (JP); KITAHARA Masaki, Musashino-shi, Tokyo 180-8585 (JP)
(74) Representative: Brevalex
(86) International application number: PCT/JP2021/045896
(87) International publication number: WO 2023/112105

(57) **Abstract**

An encoding device includes: an acquisition unit that acquires point cloud data indicating a three-dimensional position of a subject in a spherical coordinate system; an angle data encoding unit that frequency-converts scanning angle data that is time-series data of a scanning angle of each of points included in the point cloud data, quantizes a coefficient, and encodes the quantized coefficient; and a distance data encoding unit that predicts, for each of the points, a distance from a position of a measurement source to a point to be encoded on the basis of a distance from the position of the measurement source to a neighboring point in a distance map having the scanning angle as an axis, and encodes distance data indicating the predicted distance.

## Description

### Technical Field

The present invention relates to a coding apparatus, a coding method and a program.

### Background Art

Geometry based Point Cloud Compression (G-PCC), which is an international standard related to compression encoding of point cloud data generated using light detection and ranging (LiDAR) or the like has been studied. G-PCC includes an octree geometry method based on octree representation and a predictive geometry method based on prediction tree representation as encoding methods for geometry data that is coordinate information of a point cloud.

In the octree geometry method, a space including an input point cloud is divided by an octree, and in a case where a point is present in each divided region, the octree structure is determined by further dividing the space. Leaf nodes having no child correspond to each of the input point clouds. In this method, the division status of each node is encoded in order of depth from the node serving as the root. The division status of each node can be predictively encoded from a peripheral node or a parent node.

In the predictive geometry method, a prediction tree structure is determined for an input point cloud. Each node of the tree corresponds to one of the input point clouds. In this method, the number of children and the position of each child are encoded for each vertex in order from the node serving as the root. When the child position is encoded, prediction is performed from the parent position, and prediction modes and prediction residuals are encoded.

Furthermore, encoding efficiency can be improved by predictive encoding using a spherical coordinate system represented by spherical coordinates (r, θ, φ) in addition to the Cartesian coordinate system represented by orthogonal linear coordinates (x, y, z). For example, in the predictive geometry method, for a point cloud measured by a LiDAR device whose scanning pattern is an annular shape (rotated by φ), a value obtained by adding an offset to φ of the root side node can be used as a predicted value of φ.

### Summary of Invention

### Technical Problem

In general, the point clouds measured by a device such as LiDAR are often spatially sparsely distributed, and the scanning pattern is often in a simple shape such as an annular shape (by driving a laser at a constant speed rotation of a single axis). In this case, encoding can be efficiently performed by the predictive geometry method. However, in the case of a point cloud acquired by LiDAR having a scanning pattern that complicatedly intersects, an infinite number of branches occur in representation by predictive tree, and thus, there is a problem that encoding efficiency deteriorates.

In view of the above circumstances, an object of the present invention is to provide a technique capable of efficiently encoding point cloud data.

### Solution to Problem

According to an aspect of the present invention, there is provided an encoding device including: an acquisition unit configured to acquire point cloud data indicating a three-dimensional position of a subject in a spherical coordinate system; an angle data encoding unit configured to frequency-convert scanning angle data that is time-series data of a scanning angle of each of points included in the point cloud data, to quantize a coefficient, and to encode the quantized coefficient; and a distance data encoding unit configured to predict, for each of the points, a distance from a position of a measurement source to a point to be encoded on the basis of a distance from the position of the measurement source to a neighboring point in a distance map having the scanning angle as an axis, and to encode distance data indicating the predicted distance.

According to another aspect of the present invention, there is provided an encoding method including: an acquisition step of acquiring point cloud data indicating a three-dimensional position of a subject in a spherical coordinate system; an angle data encoding step of frequency-converting scanning angle data that is time-series data of a scanning angle of each of points included in the point cloud data, quantizing a coefficient, and encoding the quantized coefficient; and a distance data encoding step of predicting, for each of the points, a distance from a position of a measurement source to a point to be encoded on the basis of a distance from the position of the measurement source to a neighboring point in a distance map having the scanning angle as an axis, and encoding distance data indicating the predicted distance.

According to still another aspect of the present invention, there is provided a program for causing a computer to function as the encoding device.

### Advantageous Effects of Invention

According to the present invention, it is possible to efficiently encode point cloud data.

### Brief Description of Drawings

Fig. 1 is an overall configuration diagram of a point cloud data encoding system 1 according to an embodiment of the present invention.
Fig. 2 is a block diagram illustrating a functional configuration of an encoding device 10 according to an embodiment of the present invention.
Fig. 3 is a flowchart illustrating an operation of the encoding device 10 according to the embodiment of the present invention.

### Description of Embodiments

Hereinafter, a point cloud data encoding system according to an embodiment of the present invention will be described with reference to the drawings.

### [Configuration of Point Cloud Data Encoding System]

Hereinafter, a configuration of a point cloud data encoding system 1 according to an embodiment of the present invention will be described. The point cloud data encoding system 1 according to the embodiment described below scans a subject surface and measures a three-dimensional position of each point on a scanning line to generate point cloud data. For the generated point cloud data, the point cloud data encoding system 1 sets a trajectory of a scanning line in a spherical coordinate system as time-series data of an angle (scanning angle) and a distance with respect to time, expresses and encodes the time-series data of the angle in a frequency domain, and predictively encodes the time-series data of the distance on a two-dimensional map having an angle component as an axis. The point cloud data encoding system 1 decodes the point cloud data compressed by the predictive encoding.

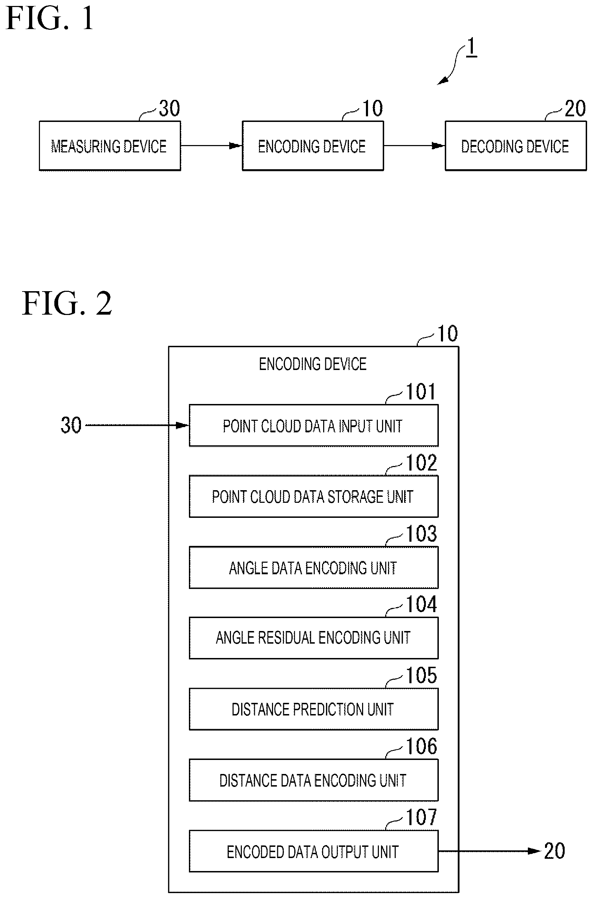

Fig. 1 is an overall configuration diagram of the point cloud data encoding system 1 according to the embodiment of the present invention. As illustrated in Fig. 1, the point cloud data encoding system 1 includes an encoding device 10 (a coding apparatus), a decoding device 20, and a measuring device 30.

The measuring device 30 scans the subject surface and measures the three-dimensional position of each point on the scanning line to generate point cloud data. The measuring device 30 has a measurement function such as LiDAR that can measure a three-dimensional position of each point on the scanning line by continuously moving a laser beam with, for example, a micro electro mechanical systems (MEMS) mirror or the like to scan the surface of the subject. The measuring device 30 outputs the generated point cloud data to the encoding device 10.

The encoding device 10 acquires the point cloud data output from the measuring device 30. For the acquired point cloud data, the encoding device 10 sets the trajectory of the scanning line in the spherical coordinate system as the time-series data of the angle and the distance with respect to time, expresses and encodes the time-series data of the angle in the frequency domain, and predictively encodes the time-series data of the distance on the two-dimensional map having the angle component as the axis. The encoding device 10 outputs the encoded data compressed by the predictive encoding to the decoding device 20.

The decoding device 20 acquires the encoded data output from the encoding device 10. The decoding device 20 decodes the acquired encoded data.

### [Configuration of Encoding Device]

Hereinafter, the configuration of the encoding device 10 according to the embodiment will be described in more detail.

Fig. 2 is a block diagram illustrating a functional configuration of the encoding device 10 according to the embodiment of the present invention. As illustrated in Fig. 2, the encoding device 10 includes a point cloud data input unit 101, a point cloud data storage unit 102, an angle data encoding unit 103, an angle residual encoding unit 104, a distance prediction unit 105, a distance data encoding unit 106, and an encoded data output unit 107.

The point cloud data input unit 101 (acquisition unit) receives an input of point cloud data indicating the three-dimensional position of the surface of the subject measured by the measuring device 30. The point cloud data input unit 101 stores the input point cloud data in the point cloud data storage unit 102. Note that the point cloud data storage unit 102 may be provided in an external device other than the encoding device 10.

The point cloud data has a value of the scanning angle of the measurement laser when the point is measured as attribute information of each point. Alternatively, the point cloud data may have information indicating the three-dimensional position of each point and the posture of the measuring device 30 as the attribute information of each point, and the point cloud data input unit 101 may derive the scanning angle on the basis of the information. It is assumed that the laser rotates on two axes, and the scanning angle has two values of θ and φ.

In addition, the point cloud data has a time stamp (time information) of the time when the point is measured as the attribute information of each point. Alternatively, the scanning time of each point is unknown, but the scanning speed is constant, the difference in scanning time between the points is known, and the point cloud data input unit 101 may derive the relative scanning time of another point with the scanning time of any point set to 0.

In a case where the accuracy of the time stamp is not sufficient and a plurality of points having close scanning times have the same time stamp, the point cloud data input unit 101 rearranges the order of the points from the start point to the end point of the curve on the assumption that the points are arranged on the curve when the points are projected on the curved surface of a radius r of the spherical coordinate system for a group of points having the same time stamp or an approximate time stamp.

In a case where the scanning time of each point is unknown, the point cloud data input unit 101 may obtain the arrangement order of the points in which the angular change amount between the points becomes constant on the assumption that the scanning speed is constant, and allocate relative times in that order.

In a case where there are a plurality of measuring devices 30, or in a case where the measuring device 30 includes a plurality of lasers and performs two or more scans at the same time, the point cloud data input unit 101 classifies the input point cloud data for each laser corresponding to the point cloud data, and stores the data in the point cloud data storage unit 102 as a point cloud group.

Note that any method may be used as a method of classifying the point cloud data. For example, in a case where an ID for identifying a laser is assigned to the point cloud data as attribute information, the point cloud data may be classified on the basis of the ID. Alternatively, some clustering processing may be performed. For example, by making a determination as to whether to add to the classified group or generate a new group on the basis of the distance to the classified points in the scanning order for each point, the points continuously measured by each laser can be grouped.

Furthermore, in a case where the posture of the measuring device 30 changes during scanning, the change in angle becomes complicated, and the encoding efficiency deteriorates in encoding of angle data to be described later. Therefore, the point cloud data may be classified as different point cloud groups before and after the change.

The angle data encoding unit 103 encodes angle data. In a case where there are a plurality of measuring devices 30, or in a case where the measuring device 30 includes a plurality of lasers and performs two or more scans at the same time, the angle data encoding unit 103 encodes the angle data for each point cloud group. The angle data encoding unit 103 uses, as time-series angle data, the angle information of the point cloud data stored in the point cloud data storage unit 102 arranged in the scanning order.

In a case where the scanning speed is not constant, the angle data encoding unit 103 generates time-series angle data in which the respective elements are arranged at regular time intervals by interpolation from the scanning angle of the point cloud data and the time. In this case, the angle data encoding unit 103 may also encode time data corresponding to each point, perform sampling by the decoding device 20, and reconstruct the original angle data. In the case of lossy encoding, the angle data encoding unit 103 may not perform sampling.

The angle data encoding unit 103 frequency-converts the time-series angle data and encodes a coefficient. The frequency conversion may be performed by any method. For example, in a case where the laser is driven by the MEMS device in the measuring device 30, the angle of the laser is often changed according to a sine wave, and thus, the angle data encoding unit 103 can be efficiently expressed by discrete cosine transform (DCT) conversion.

Furthermore, at this time, the angle data encoding unit 103 may round down or quantize the coefficient while allowing a certain degree of error. Furthermore, the angle data encoding unit 103 may evaluate this error not only by the angle but also by the error of the coordinates in the orthogonal coordinate system to be finally decoded. Furthermore, the angle data encoding unit 103 may evaluate and determine the trade-off with the code amount.

Alternatively, instead of explicitly encoding the frequency component, the angle data encoding unit 103 may use an appropriate one from a pattern of predetermined angle data and encode information for specifying the pattern. In this case, the angle data encoding unit 103 may encode the frequency component of each pattern as additional information common to all groups. Alternatively, the angle data encoding unit 103 may express a parameter by a function for an arbitrary time and encode the parameter.

Note that the angle data encoding unit 103 may use the same coefficient as the coefficients of the other groups. For example, in a case where the measuring device 30 includes a plurality of lasers, the value of the scanning angle φ is common to all the lasers, and only the value of the scanning angle θ is different, the angle data encoding unit 103 can use coefficients of a group corresponding to another laser that has already been encoded for the angle φ. In a case where the difference between the scanning angles θ of two different lasers is constant, one can be expressed by adding an offset to a decoding result of the other.

The angle residual encoding unit 104 encodes a residual with respect to the encoded/decoded angle data. Note that the angle residual encoding unit 104 may not perform encoding in a case where the residual is small, and may encode a flag indicating necessity/unnecessity of decoding.

The distance prediction unit 105 encodes the distance data for each point. The distance prediction unit 105 performs encoding in ascending order from a point having the earliest scanning time among the input point cloud data. The distance prediction unit 105 predicts the distance between the position of the laser irradiation source (measurement source) and the point to be encoded. Note that the distance prediction unit 105 may use, as the predicted value, a distance of a point encoded immediately before, or a distance of a point having a close scanning angle among points encoded so far.

The distance prediction unit 105 generates a map of a two-dimensional distance r (hereinafter referred to as a "distance map") having the scanning angle θ and the scanning angle φ as axes. The distance prediction unit 105 stores the distance data of the points encoded so far in the point cloud data storage unit 102, and performs prediction by referring to the distance map.

Note that the distance prediction unit 105 may generate a distance map for each group of the point cloud data, or may use a distance map common to all the groups. Alternatively, the distance prediction unit 105 may refer to a distance map of another group. Alternatively, the distance prediction unit 105 may select a specific distance map from a plurality of distance maps, and encode information indicating the selected distance map as additional information.

In a case where there is a posture change of the measuring device 30, movement of the subject, or the like, the distance prediction unit 105 may update the map by reflecting the posture change or the movement when using the distance map generated in a certain group in another group.

Alternatively, the distance prediction unit 105 may newly generate a distance map from the decoded point cloud information. For example, the distance prediction unit 105 may convert absolute coordinates of the decoded point cloud in the orthogonal coordinate system into relative spherical coordinates in the position/posture of the measuring device 30 of the encoding target group, and generate the distance map on the basis of the conversion result.

The distance prediction unit 105 may determine the predicted value from the distances to the plurality of neighboring points using an average value or another calculation method. For example, the distance prediction unit 105 may use the median value of the distance to the neighboring point as the predicted value. For example, the distance prediction unit 105 may perform weighting at the time of performing prediction, and at that time, the weight may be determined by the distance at the time. Furthermore, in a case where prediction has been performed using the same neighboring point on the distance map so far, the distance prediction unit 105 may calculate the reliability of prediction from the amount of prediction residual and determine the weight on the basis of the calculation result.

Note that the distance prediction unit 105 may select a specific prediction method from several prediction methods to generate a predicted value, and may encode information indicating the selected prediction method as additional information.

The distance data encoding unit 106 encodes the prediction residual value with respect to the predicted value for the distance from the position of the laser irradiation source (measurement source) to the point to be encoded. Note that the distance data encoding unit 106 may perform encoding after quantizing the prediction residual value. The distance data encoding unit 106 outputs the encoded data to the encoded data output unit 107.

The encoded data output unit 107 acquires the encoded data output from the distance data encoding unit 106. The encoded data output unit 107 outputs the acquired encoded data to the decoding device 20.

### [Operation of Encoding Device]

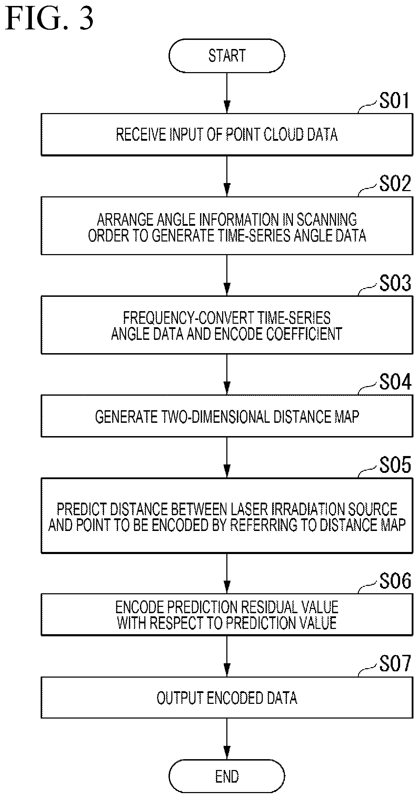

Hereinafter, an example of operation of the encoding device 10 will be described. Fig. 3 is a flowchart illustrating an operation of the encoding device 10 according to the embodiment of the present invention. The operation of the encoding device 10 illustrated in the flowchart of Fig. 3 is started, for example, when the point cloud data is input from the measuring device 30 to the encoding device 10.

First, the point cloud data input unit 101 receives an input of point cloud data indicating the three-dimensional position of the surface of the subject measured by the measuring device 30 (step S01).

Next, the angle data encoding unit 103 encodes the angle data. The angle data encoding unit 103 arranges the angle information of the input point cloud data in the scanning order to generate time-series angle data (step S02). The angle data encoding unit 103 frequency-converts the time-series angle data and encodes the coefficient (step S03).

Next, the distance prediction unit 105 encodes the distance data for each point. The distance prediction unit 105 performs encoding in ascending order from a point having the earliest scanning time among the input point cloud data. The distance prediction unit 105 predicts the distance between the position of the laser irradiation source (measurement source) and the point to be encoded. The distance prediction unit 105 generates a two-dimensional distance map having the scanning angle θ and the scanning angle φ as axes (step S04). The distance prediction unit 105 stores the distance data of the points encoded so far in the point cloud data storage unit 102, and performs prediction by referring to the distance map (step S05).

Next, the distance data encoding unit 106 encodes the prediction residual value with respect to the predicted value for the distance between the position of the laser irradiation source (measurement source) and the point to be encoded (step S06).

Next, the encoded data output unit 107 outputs the encoded data to the decoding device 20 (step S07). Thus, the operation of the encoding device 10 illustrated in the flowchart of Fig. 3 ends.

As described above, the encoding device 10 according to the present embodiment frequency-converts the scanning angle data in which the scanning angle is time-series data, quantizes coefficients, and encodes the quantized coefficients. The encoding device 10 predicts and encodes, for each point, a distance to a point to be encoded from a neighboring point on the distance map using a distance map having a scanning angle based on a decoding result as an axis, and stores the distance based on the decoding result in the distance map.

Note that the configuration of the decoding device 20 corresponding to the above-described encoding device 10 is as follows. The decoding device 20 decodes the scanning angle data. The decoding device 20 predicts, for each point, a distance to a point to be decoded from a neighboring point on the map using a distance map having a scanning angle based on a decoding result as an axis, and reconstructs three-dimensional coordinates from the scanning angle and the distance.

### (Modification Examples)

Note that the encoding device 10 may encode attribute information such as color or reflection intensity by a method similar to the above distance. For example, in a case where the attribute information is encoded point by point together with the distance information, the encoding device 10 may evaluate reliability of a point to be used for prediction reference with the attribute information and use the reliability for selection. For example, the encoding device 10 may ignore a point having a unique intensity as compared with the neighboring points. Furthermore, for example, the encoding device 10 may perform evaluation using the number of responses to pulse waves and a response waveform.

Note that, in a case where the subject is translucent and a part of the laser beam is transmitted through the subject to reach another subject, a plurality of points may be observable in one scan. In this case, the encoding device 10 can efficiently perform compression by setting the scanning time and the angle values to be common to a plurality of points having the same angle and different distances with respect to the same scanning time to be input and encoding the values of the plurality of distances.

Note that, in the point-by-point processing, instead of encoding in the scanning order, for example, the encoding device 10 may first encode some points on the scanning line, and encode the remaining points with reference to points located forward and backward in the scanning order among the already encoded points in the same group. For example, in the encoding of the angle residual, in a case where the angle residual is very small at both the front and rear points, the encoding device 10 may skip encoding the angle residual and the flag indicating whether or not the angle residual is necessary. Alternatively, the encoding device 10 may encode the prediction residual by using the weighted sum of the angle residuals of both as the predicted value of the angle residual of the point to be encoded. Alternatively, in the prediction of the distance information, the encoding device 10 may use the weighted sum of the distance information of the front and rear points as the predicted value.

As described above, the encoding device 10 according to the embodiment of the present invention compresses and encodes the point cloud data. For a point cloud acquired by LiDAR of a type in which a laser beam is continuously moved by, for example, a MEMS mirror or the like to scan a surface of a subject and a three-dimensional position of each point on a scanning line is measured, the encoding device 10 expresses and encodes, in a frequency domain, time-series data of an angle by using a trajectory of a scanning line in a spherical coordinate system as time-series data of an angle and a distance with respect to time, and predictively encodes time-series data of a distance on a two-dimensional distance map having an angle component as an axis.

Accordingly, the encoding device 10 according to the embodiment of the present invention can efficiently encode a point cloud acquired by LiDAR having a scanning pattern that complicatedly intersects. Furthermore, the encoding device 10 according to the embodiment of the present invention can perform predictive encoding with high accuracy even in a scene where distances corresponding to the same scanning angle are different depending on the time, such as a dynamic scene where the position of the subject changes depending on the time, for example.

According to the above-described embodiment, the encoding device includes an acquisition unit, an angle data encoding unit, and a distance data encoding unit. For example, the encoding device is the encoding device 10 in the embodiment, the acquisition unit is the point cloud data input unit 101 in the embodiment, the angle data encoding unit is the angle data encoding unit 103 in the embodiment, and the distance data encoding unit is the distance data encoding unit 106 in the embodiment.

The acquisition unit acquires point cloud data indicating the three-dimensional position of the subject in the spherical coordinate system. The angle data encoding unit frequency-converts the scanning angle data, which is time-series data of the scanning angle of each point included in the point cloud data, quantizes coefficients, and encodes the quantized coefficients. The distance data encoding unit predicts, for each point, the distance from the position of the measurement source to the point to be encoded on the basis of the distance from the position of the measurement source to the neighboring point in the distance map having the scanning angle as an axis, and encodes distance data indicating the predicted distance.

In the above encoding device, the distance map may be a two-dimensional map having two scanning angles in the spherical coordinate system as axes. For example, the two scanning angles are values of θ and φ in the embodiment.

In the above encoding device, the point cloud data may include time information indicating the time when the position of each point is measured. For example, the time information is a time stamp in the embodiment. In this case, the angle data encoding unit may generate scanning angle data by rearranging the scanning angles of the respective points on the basis of the time information.

Note that, in the above encoding device, the distance data encoding unit may encode the distance data in order from a point at which the time based on the time information is earliest.

Note that, in the above encoding device, in a case where the point cloud data is data generated by a plurality of scans, the acquisition unit may group the point cloud data for each scan. For example, a case where the point cloud data is data generated by a plurality of scans is a case where the number of measuring devices 30 is plural in the embodiment, or a case where the measuring device 30 includes a plurality of lasers and performs two or more scans at the same time. In this case, the angle data encoding unit may encode the scanning angle data for each group.

Note that, in the above encoding device, the distance data encoding unit may predict the distance from the position of the measurement source to the point to be encoded on the basis of an average value or a median value of distances from the position of the measurement source to a plurality of neighboring points in the distance map.

A part of the encoding device 10 in each embodiment described above may be implemented by a computer. In such a case, a program for implementing the functions may be recorded in a computer-readable recording medium, and the functions may be implemented by loading the program recorded on this recording medium to a computer system, and executing the program. Note that the "computer system" mentioned herein includes an OS and hardware such as peripheral devices. Also, the "computer-readable recording medium" is a portable medium such as a flexible disk, a magnetooptical disc, a ROM, or a CD-ROM, or a storage device such as a hard disk embedded in the computer system. Further, the "computer-readable recording medium" may include a medium that dynamically holds the program for a short time, such as a communication line in a case where the program is transmitted via a network such as the Internet or a communication line such as a telephone line, and a medium that holds the program for a certain period of time, such as a volatile memory inside a computer system serving as a server or a client in that case. Also, the foregoing program may be for implementing some of the functions described above, may be implemented in a combination of the functions described above and a program already recorded in a computer system, or may be implemented with a programmable logic device such as a field programmable gate array (FPGA).

Although the embodiments of the present invention have been described in detail with reference to the drawings, specific configurations are not limited to the embodiments, and include design and the like within the scope of the present invention without departing from the gist of the present invention.

### Reference Signs List

- 1: Point cloud data encoding system
- 10: Encoding device (a coding apparatus)
- 20: Decoding device
- 30: Measuring device
- 101: Point cloud data input unit
- 102: Point cloud data storage unit
- 103: Angle data encoding unit
- 104: Angle residual encoding unit
- 105: Distance prediction unit
- 106: Distance data encoding unit
- 107: Encoded data output unit

## Claims

1. An encoding device comprising:
an acquisition unit configured to acquire point cloud data indicating a three-dimensional position of a subject in a spherical coordinate system;
an angle data encoding unit configured to frequency-convert scanning angle data that is time-series data of a scanning angle of each of points included in the point cloud data, to quantize a coefficient, and to encode the quantized coefficient; and
a distance data encoding unit configured to predict, for each of the points, a distance from a position of a measurement source to a point to be encoded on the basis of a distance from the position of the measurement source to a neighboring point in a distance map having the scanning angle as an axis, and to encode distance data indicating the predicted distance.

2. The encoding device according to claim 1, wherein the distance map is a two-dimensional map having two scanning angles in the spherical coordinate system as axes.

3. The encoding device according to claim 1 or 2,
wherein the point cloud data includes time information indicating a time at which a position of each of the points is measured, and
the angle data encoding unit generates the scanning angle data by rearranging the scanning angles of the respective points on the basis of the time information.

4. The encoding device according to claim 3, wherein the distance data encoding unit encodes the distance data in order from a point at which the time based on the time information is earliest.

5. The encoding device according to any one of claims 1 to 4,
wherein the acquisition unit groups the point cloud data for each scan in a case where the point cloud data is data generated by a plurality of scans, and
the angle data encoding unit encodes the scanning angle data for each group.

6. The encoding device according to any one of claims 1 to 5, wherein the distance data encoding unit predicts the distance from the position of the measurement source to the point to be encoded on the basis of an average value or a median value of distances from the position of the measurement source to a plurality of neighboring points in the distance map.

7. An encoding method comprising:
an acquisition step of acquiring point cloud data indicating a three-dimensional position of a subject in a spherical coordinate system;
an angle data encoding step of frequency-converting scanning angle data that is time-series data of a scanning angle of each of points included in the point cloud data, quantizing a coefficient, and encoding the quantized coefficient; and
a distance data encoding step of predicting, for each of the points, a distance from a position of a measurement source to a point to be encoded on the basis of a distance from the position of the measurement source to a neighboring point in a distance map having the scanning angle as an axis, and encoding distance data indicating the predicted distance.

8. A program for causing a computer to function as the encoding device according to any one of claims 1 to 6.
